# EUROPEAN PATENT SPECIFICATION

(11) **EP 3 476 506 B1**
(45) Date of publication and mention of the grant of the patent: **07.12.2022**
(21) Application number: 18203000.7
(22) Date of filing: 26.10.2018
(51) Int. Cl.: B23B 5/28, B22D 31/00, B24B 9/04

(54) **DEVICE FOR AUTOMATICALLY REMOVING BURRS FROM A WHEEL HUB SECTION**
VORRICHTUNG ZUM AUTOMATISCHEN ENTGRATEN EINER RADNABE
DISPOSITIF D'ÉLIMINATION AUTOMATIQUE DE BAVURES D'UN MOYEU DE ROUE

(30) Priority: 31.10.2017 CN 201711049081
(43) Date of publication of application: 01.05.2019
(73) Proprietor: Citic Dicastal Co., Ltd., 066011 Quinhuangdao, Heibei (CN)
(72) Inventor: Liu, Huiying, Qinhuangdao, Heibei 066011 (CN); Bi, Xinyu, Qinhuangdao, Heibei 066011 (CN); Yu, Zhiyuan, Qinhuangdao, Heibei 066011 (CN)
(74) Representative: Gong, Jinping

(56) References cited:
- CN-A- 106 938 417
- CN-A- 107 283 000

## Description

### FIELD OF THE INVENTION

The present invention relates to the technical field of burr removal after machining of wheels, specifically to a device for removing burrs from a riser of an aluminum alloy wheel.

### BACKGROUND OF THE INVENTION

The machining accuracy and machining quality of a wheel riser directly affect the installation of a buckle cap. After the wheel is machined, the edge of the riser is synthesized by casting and machined surfaces, so a circle of burrs remains. Currently, the burrs here are removed manually, the effect is not ideal, the front casting deformation of the riser increases the difficulty of removal, the deep or shallow groove and the large or small force will cause the burrs at the edge of the riser not to be removed smoothly, the customer will complain poor product consistency, and when the burrs are removed manually, the burrs may be missing or remain, and the unqualified appearance and the incomplete coverage of a paint film after coating cause corrosion. Based on the current situation, this patent provides a device for automatically removing burrs from a wheel riser.

CN 107 283 000 A relates to a high-precision device for removing burrs of a wheel riser, which integrates a precision positioning system with a burr removing tool system, according to the preamble of appended claim 1.

### SUMMARY OF THE INVENTION

The object of the present invention is to provide a device for automatically removing burrs from the edge of a wheel riser, which solves the problem of inconsistency of the riser after burr removal of a wheel, improves the effect of removing burrs from the edge of the riser, improves the efficiency of removing burrs and reduces the risk of riser corrosion. The device is simple, flexible and efficient, and can meet automatic continuous operation.

In order to achieve the above object, a technical solution according to anyone of claim 1-2 is provided. The technical solution of the present invention is: a device for automatically removing burrs from a wheel riser is composed of a frame, a clamping gear rack structure, a support plate, a servo motor, lower guide rails, a left sliding plate, a clamping cylinder, a shaft, a clamping wheel, a left burr tool, ranging sensors, a feed gear rack structure, a left sliding block, a movable support plate, guide pillars, a feed cylinder, a right sliding block, upper guide rails, a cylinder support plate, a distance adjusting cylinder, a right burr tool and a right sliding plate.

The support plate is fixed on the frame, the lower guide rails are mounted on the support plate, the left sliding plate is connected with the right sliding plate by the clamping gear rack structure, the servo motor is connected with the clamping wheel through the shaft, the clamping cylinder is connected with the left sliding plate , and the servo motor is mounted on the left sliding plate . When the clamping cylinder drives the left sliding plate to move, the right sliding plate moves synchronously with the left sliding plate under the action of the clamping gear rack structure to control the clamping wheel to center and clamp a wheel. The servo motor controls the rotation of the clamping wheel, so that the wheel can rotate while being clamped.

Two guide pillars are bilaterally symmetrically mounted at the upper part of the frame , the feed cylinder is mounted in the upper center of the frame , the output end of the feed cylinder is connected to the movable support plate , the upper guide rails are mounted on the movable support plate , the left sliding block is connected with the right sliding block by the feed gear rack structure , the left burr tool and the right burr tool are respectively fixed on the left sliding block and the right sliding block , a ranging sensor is respectively mounted on the left burr tool and the right burr tool , the cylinder support plate is fixed on the movable support plate , the distance adjusting cylinder is mounted on the cylinder support plate , and the output end of the distance adjusting cylinder is connected to the right sliding block . When the distance adjusting cylinder drives the right sliding block to move, the left sliding block and the right sliding block move synchronously under the action of the feed gear rack structure , so that the left burr tool and the right burr tool move synchronously to adjust the distance between the tools according to the diameter of a cap slot. Under the guidance of the guide pillars , the feed cylinder controls the movable support plate to move up and down so as to realize feeding and resetting of the burr tools. The two ranging sensors measure the distances from the tools to the burrs of the riser, an average value is taken and then a signal is fed back to the feed cylinder to determine the exact descending distances of the burr tools, and the burrs are accurately removed by cooperation of the rotating wheel and the linearly fed tools.

During operation, firstly, the distance between the tools is adjusted according to the diameter of a cap slot of a wheel produced on an automatic line, that is, the distance adjusting cylinder is started, and the distance between the left burr tool and the right burr tool can be adjusted under the action of the gear rack structure, so that the distance between the tools is matched with the diameter of the cap slot of the produced wheel; when the wheel reaches a position below the device along a roller bed, the roller bed stops rotating, and then the clamping cylinder is started to center and clamp the wheel; next, the ranging sensors measure the distances from the tools to the edge of the riser and feed the measurement results back to the feed cylinder, the feed cylinder accurately descends for feeding, at the same time, the servo motor drives the clamping wheel to rotate so as to drive the hub to rotate, and the burr tools remove burrs when contacting the rotating wheel; and finally, the burr tools ascend to reset, the clamping wheel stops rotating and releases the hub, the roller bed rotates away the hub from which the burrs have been removed, and receives next hub to be deburred, and so on.

The present invention can meet the requirement for automatically removing burrs from a riser in wheel line operation, and greatly improves the removal effect compared with a manual burr removal method. The device can, according to the deformation of the riser of each wheel, correspondingly adjust the feed distance of the tools, thereby greatly improving the consistency of products. By adopting the device to remove burrs, the fillets at the edge of the riser are smooth and uniform, which solves the problem of inconsistency of the riser after the burrs are removed from the wheel.

### BRIEF DESCRIPTION OF THE DRAWINGS

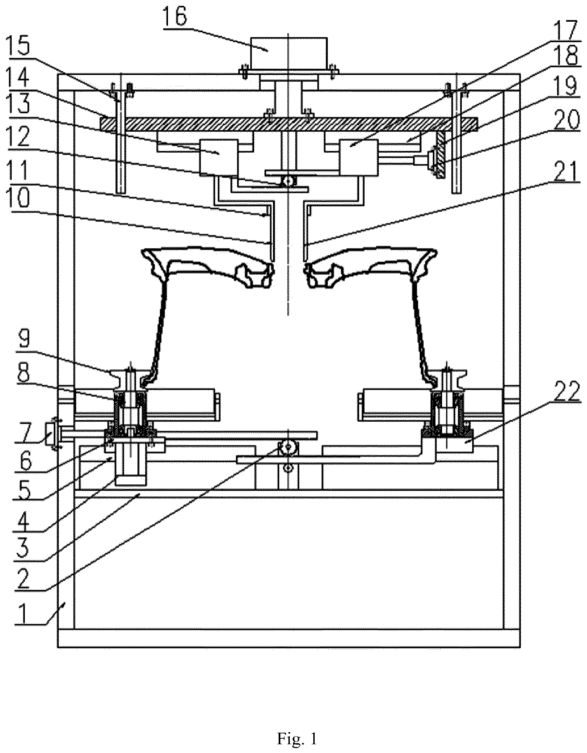

Fig. 1 is a front view of a device for automatically removing burrs from a wheel riser;

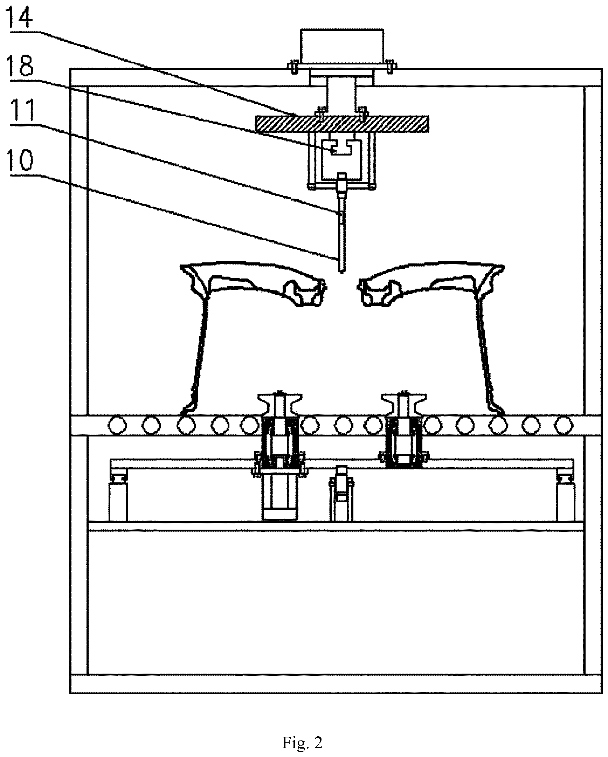

Fig. 2 is a left view of the device for automatically removing burrs from the wheel riser;

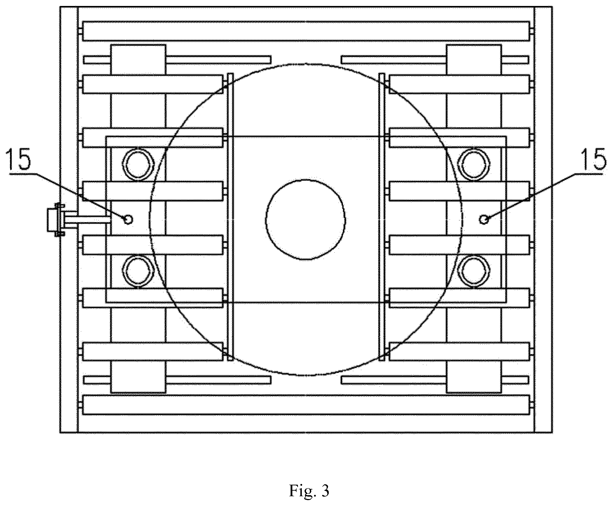

Fig. 3 is a top view of the device for automatically removing burrs from the wheel riser;

In which, 1-frame, 2-clamping gear rack structure, 3-support plate, 4-servo motor, 5-lower guide rail, 6-left sliding plate, 7-clamping cylinder, 8-shaft, 9-clamping wheel, 10-left burr tool, 11-ranging sensor, 12-feed gear rack structure, 13-left sliding block, 14-movable support plate, 15-guide pillar, 16-feed cylinder, 17-right sliding block, 18-upper guide rail, 19-cylinder support plate, 20-distance adjusting cylinder, 21-right burr tool, 22-right sliding plate.

### DETAILED DESCRIPTION OF THE EMBODIMENTS

The details and working conditions of the specific device proposed by the present invention will be described below in combination with the accompanying drawings.

A device for automatically removing burrs from a wheel riser is composed of a frame 1, a clamping gear rack structure 2, a support plate 3, a servo motor 4, lower guide rails 5, a left sliding plate 6, a clamping cylinder 7, a shaft 8, a clamping wheel 9, a left burr tool 10, ranging sensors 11, a feed gear rack structure 12, a left sliding block 13, a movable support plate 14, guide pillars 15, a feed cylinder 16, a right sliding block 17, upper guide rails 18, a cylinder support plate 19, a distance adjusting cylinder 20, a right burr tool 21 and a right sliding plate 22.

The support plate 3 is fixed on the frame 1, the lower guide rails 5 are mounted on the support plate 3, the left sliding plate 6 is connected with the right sliding plate 22 by the clamping gear rack structure 2, the servo motor 4 is connected with the clamping wheel 9 through the shaft 8, the clamping cylinder 7 is connected with the left sliding plate 6, and the servo motor 4 is mounted on the left sliding plate 6. When the clamping cylinder 7 drives the left sliding plate 6 to move, the right sliding plate 22 moves synchronously with the left sliding plate 6 under the action of the clamping gear rack structure 2 to control the clamping wheel 9 to center and clamp a wheel. The servo motor 4 controls the rotation of the clamping wheel 9, so that the wheel can rotate while being clamped.

Two guide pillars 15 are bilaterally symmetrically mounted at the upper part of the frame 1, the feed cylinder 16 is mounted in the upper center of the frame 1, the output end of the feed cylinder 16 is connected to the movable support plate 14, the upper guide rails 18 are mounted on the movable support plate 14, the left sliding block 13 is connected with the right sliding block 17 by the feed gear rack structure 12, the left burr tool 10 and the right burr tool 21 are respectively fixed on the left sliding block 13 and the right sliding block 17, a ranging sensor 11 is respectively mounted on the left burr tool 10 and the right burr tool 21, the cylinder support plate 19 is fixed on the movable support plate 14, the distance adjusting cylinder 20 is mounted on the cylinder support plate 19, and the output end of the distance adjusting cylinder 20 is connected to the right sliding block 17. When the distance adjusting cylinder 20 drives the right sliding block 17 to move, the left sliding block 13 and the right sliding block 17 move synchronously under the action of the feed gear rack structure 12, so that the left burr tool 10 and the right burr tool 21 move synchronously to adjust the distance between the tools according to the diameter of a cap slot. Under the guidance of the guide pillars 15, the feed cylinder 16 controls the movable support plate 14 to move up and down so as to realize feeding and resetting of the burr tools. The two ranging sensors 11 measure the distances from the tools to the burrs of the riser, an average value is taken and then a signal is fed back to the feed cylinder 16 to determine the exact descending distances of the burr tools, and the burrs are accurately removed by cooperation of the rotating wheel and the linearly fed tools.

During operation, firstly, the distance between the tools is adjusted according to the diameter of a cap slot of a wheel produced on an automatic line, that is, the distance adjusting cylinder is started, and the distance between the left burr tool and the right burr tool can be adjusted under the action of the gear rack structure, so that the distance between the tools is matched with the diameter of the cap slot of the produced wheel; when the wheel reaches a position below the device along a roller bed, the roller bed stops rotating, and then the clamping cylinder is started to center and clamp the wheel; next, the ranging sensors measure the distances from the tools to the edge of the riser and feed the measurement results back to the feed cylinder, the feed cylinder accurately descends for feeding, at the same time, the servo motor drives the clamping wheel to rotate so as to drive the hub to rotate, and the burr tools remove burrs when contacting the rotating wheel; and finally, the burr tools ascend to reset, the clamping wheel stops rotating and releases the hub, the roller bed rotates away the hub from which the burrs have been removed, and receives next hub to be deburred, and so on.

The present invention can meet the requirement for automatically removing burrs from a riser in wheel line operation, and greatly improves the removal effect compared with a manual burr removal method. The device can, according to the deformation of the riser of each wheel, correspondingly adjust the feed distance of the tools, thereby greatly improving the consistency of products. By adopting the device to remove burrs, the fillets at the edge of the riser are smooth and uniform, which solves the problem of inconsistency of the riser after the burrs are removed from the wheel.

## Claims

1. A device for automatically removing burrs from a wheel riser, comprising a frame (1), a support plate (3), lower guide rails (5), a left sliding plate (6), a right sliding plate (22), a servo motor (4), a shaft (8), a clamping cylinder (7), a left burr tool (10), a right burr tool (21), a feed gear rack structure (12), a left sliding block (13), a right sliding block (17), two guide pillars (15), a feed cylinder (16), a cylinder support plate (19), a movable support plate (14), a distance adjusting cylinder (20), wherein
the support plate (3) is fixed on the frame (1), the lower guide rails (5) are mounted on the support plate (3), the clamping cylinder (7) is connected with the left sliding plate (6), the left sliding block (13) is connected with the right sliding block (17) by the feed gear rack structure (12), the left burr tool (10) and the right burr tool (21) are respectively fixed on the left sliding block (13) and the right sliding block (17),
**characterized in that** the device further comprises a clamping wheel (9), a clamping gear rack structure (2), upper guide rails (18), ranging sensors (11), the left sliding plate (6) being connected with the right sliding plate (22) by the clamping gear rack structure (2), the servo motor (4) is connected with the clamping wheel (9) through the shaft (8),
when the clamping cylinder (7) drives the left sliding plate (6) to move, the right sliding plate (22) moves synchronously with the left sliding plate (6) under the action of the clamping gear rack structure (2) to control the clamping wheel (9) to center and clamp a wheel, wherein the servo motor (4) is mounted on the left sliding plate (6) and controls the rotation of the clamping wheel (9), so that the wheel can rotate while being clamped,
wherein the two guide pillars (15) are bilaterally symmetrically mounted at the upper part of the frame (1), the feed cylinder (16) is mounted in the upper center of the frame (1), the output end of the feed cylinder (16) is connected to the movable support plate (14), wherein the upper guide rails (18) are mounted on the movable support plate (14), the ranging sensors (11) are respectively mounted on the left burr tool (10) and the right burr tool (21),
the cylinder support plate (19) is fixed on the movable support plate (14), wherein the distance adjusting cylinder (20) is mounted on the cylinder support plate (19), and the output end of the distance adjusting cylinder (20) is connected to the right sliding block (17).

2. The device for automatically removing burrs from a wheel riser according to claim 1, wherein when the distance adjusting cylinder (20) drives the right sliding block (17) to move, the left sliding block (13) and the right sliding block (17) move synchronously under the action of the feed gear rack structure (12), so that the left burr tool (10) and the right burr tool (21) move synchronously to adjust the distance between the tools according to the diameter of a cap slot, under the guidance of the guide pillars (15), the feed cylinder (16) controls the movable support plate (14) to move up and down so as to realize feeding and resetting of the burr tools, the two ranging sensors (11) measure the distances from the tools to the burrs of the riser, an average value is taken and then a signal is fed back to the feed cylinder (16) to determine the exact descending distances of the burr tools, and the burrs are accurately removed by cooperation of the rotating wheel and the linearly fed tools.

## Patentansprüche

1. Vorrichtung zum automatischen Entfemen von Graten von einem Radsteigrohr, umfassend einen Rahmen (1), eine Stützplatte (3), untere Führungsschienen (5), eine linke Gleitplatte (6), eine rechte Gleitplatte (22), einen Stellmotor (4), eine Welle (8), einen Klemmzylinder (7), ein linkes Abgratwerkzeug (10), ein rechtes Abgratwerkzeug (21), eine Vorschubzahnstangenstruktur (12), einen linken Gleitblock (13), einen rechten Gleitblock (17), zwei Führungssäulen (15), einen Vorschubzylinder (16), eine Zylinderstützplatte (19), eine bewegliche Stützplatte (14), einen Abstandseinstellzylinder (20), wobei die Stützplatte (3) am Rahmen (1) befestigt ist, die unteren Führungsschienen (5) auf der Stützplatte (3) montiert sind, der Klemmzylinder (7) mit der linken Gleitplatte (6) verbunden ist, der linke Gleitblock (13) mit dem rechten Gleitblock (17) durch die Vorschubzahnstangenstruktur (12) verbunden ist, und das linke Abgratwerkzeug (10) und das rechte Abgratwerkzeug (21) an dem linken Gleitblock (13) und dem rechten Gleitblock (17) jeweils befestigt sind,
**dadurch gekennzeichnet, dass** die Vorrichtung ferner ein Klemmrad (9), eine Klemmzahnstangenstruktur (2), obere Führungsschienen (18), Abstandssensoren (11) umfasst, wobei die linke Gleitplatte (6) mit der rechten Gleitplatte (22) durch die Klemmzahnstangenstruktur (2) verbunden ist, und der Stellmotor (4) mit dem Klemmrad (9) durch die Welle (8) verbunden ist,
dass sich die rechte Gleitplatte (22) synchron mit der linken Gleitplatte (6) unter der Wirkung der Klemmzahnstangenstruktur (2) bewegt, wenn der Klemmzylinder (7) die linke Gleitplatte (6) zur Bewegung antreibt, um das Klemmrad (9) zum Zentrieren und Klemmen eines Rades zu steuern, wobei der Stellmotor (4) auf der linken Gleitplatte (6) montiert ist und die Drehung des Klemmrades (9) steuert, so dass sich das Rad drehen kann, während es geklemmt ist,
wobei die zwei Führungssäulen (15) beidseitig symmetrisch am oberen Teil des Rahmens (1) montiert sind, der Vorschubzylinder (16) in der oberen Mitte des Rahmens (1) montiert ist, und das Ausgangsende des Vorschubzylinders (16) mit der beweglichen Stützplatte (14) verbunden ist, wobei die oberen Führungsschienen (18) an der beweglichen Stützplatte (14) montiert sind, die Abstandssensoren (11) an dem linken Abgratwerkzeug (10) und dem rechten Abgratwerkzeug (21) jeweils montiert sind, und die Zylinderstützplatte (19) auf der beweglichen Stützplatte (14) befestigt ist, wobei der Abstandseinstellzylinder (20) auf der Zylinderstützplatte (19) montiert ist, und das Ausgangsende des Abstandseinstellzylinders (20) mit dem rechten Gleitblock (17) verbunden ist.

2. Vorrichtung zum automatischen Entfernen von Graten von einem Radsteigrohr nach Anspruch 1, wobei sich der linke Gleitblock (13) und der rechte Gleitblock (17) synchron unter der Wirkung der Vorschubzahnstangenstruktur (12) bewegen, wenn der Abstandseinstellzylinder (20) den rechten Gleitblock (17) zur Bewegung antreibt, so dass sich das linke Abgratwerkzeug (10) und das rechte Abgratwerkzeug (21) synchron bewegen, um den Abstand zwischen den Werkzeugen entsprechend dem Durchmesser eines Kappenschlitzes einzustellen, wobei der Vorschubzylinder (16) unter der Führung der Führungssäulen (15) die bewegliche Stützplatte (14) zur Aufwärts- und Abwärtsbewegung steuert, um das Vorschieben und Zurücksetzen der Abgratwerkzeuge zu realisieren, wobei die zwei Abstandssensoren (11) die Abstände von den Werkzeugen zu den Graten des Steigrohrs messen, wobei ein Mittelwert genommen ist und dann ein Signal an den Vorschubzylinder (16) zurückgeführt ist, um die genauen Abstiegsabstände der Abgratwerkzeuge zu bestimmen, und die Grate durch Zusammenwirkung des drehenden Rades und der linear vorgeschobenen Werkzweuge genau entfernt sind.

## Revendications

1. Un dispositif pour éliminer automatiquement des bavures d'un élévateur de roue, comprenant un cadre (1), une plaque de support (3), des rails de guidage inférieurs (5), une plaque coulissante gauche (6), une plaque coulissante droite (22), un servomoteur (4), un arbre (8), un cylindre de serrage (7), une outil bavure à gauche (10), une bavure outil à droite (21), une structure de crémaillère d'alimentation (12), un bloc coulissant gauche (13) , un bloc coulissant droit (17), deux piliers de guidage (15), un vérin d'alimentation (16), une plaque de support de vérin (19), une plaque de support mobile (14), un vérin de réglage de distance (20), dans lequel la plaque de support (3) est fixée sur le cadre (1), les rails de guidage inférieurs (5) sont montés sur la plaque de support (3), le cylindre de serrage (7) est relié à la plaque coulissante gauche (6), le bloc coulissant gauche (13) est relié au bloc coulissant droit (17) par la structure de crémaillère d'alimentation (12), l'outil bavure àgauche (10) et l'outil bavure à droit (21) sont respectivement fixés sur le bloc coulissant gauche (13) et bloc coulissant droit (17),
**caractérisé en ce que** le dispositif comprend en outre une roue de serrage (9), une structure de crémaillère de serrage (2), des rails de guidage supérieurs (18), des capteurs de distance (11), la plaque coulissante gauche (6) étant reliée à la plaque coulissante droite (22) par la structure de crémaillère de serrage (2), le servomoteur (4) est relié à la roue de serrage (9) à travers l'arbre (8),
lorsque le cylindre de serrage (7) entraîne la plaque coulissante gauche (6) pour se déplacer, la plaque coulissante droite (22) se déplace de manière synchrone avec la plaque coulissante gauche (6) sous l'action de la structure de crémaillère de serrage (2) pour contrôler le roue de serrage (9) pour centrer et serrer une roue, dans lequel, le servomoteur (4) étant monté sur la plaque coulissante gauche (6) et commandant la rotation de la roue de serrage (9), de sorte que la roue peut tourner tout en étant serrée ,
dans lequel les deux piliers de guidage (15) sont montés bilatéralement symétriquement à la partie supérieure du cadre (1), le vérin d'alimentation (16) est monté au centre supérieur du cadre (1), l'extrémité de sortie du vérin d'alimentation ( 16) est relié à la plaque de support mobile (14), dans lequel les rails de guidage supérieurs (18) sont montés sur la plaque de support mobile (14), les capteurs de distance (11) sont respectivement montés sur l'outil bavure à gauche (10) et l'outil bavure à droit (21), la plaque de support de cylindre (19) est fixée sur la plaque de support mobile (14), dans lequel le vérin de réglage de distance (20) est monté sur la plaque de support de cylindre (19), et l'extrémité de sortie du vérin de réglage de distance (20) est relié au bloc coulissant droit (17).

2. Le dispositif pour éliminer automatiquement les bavures d'un élévateur de roue selon la revendication 1, dans lequel lorsque le vérin de réglage de distance (20) entraîne le bloc coulissant droit (17) pour se déplacer, le bloc coulissant gauche (13) et le bloc coulissant droit (17) se déplacent de manière synchrone sous l'action de la structure de crémaillère d'alimentation (12), de sorte que l'outil bavure à gauche (10) et l'outil bavure à droit (21) se déplacent de manière synchrone pour régler la distance entre les outils selon le diamètre d'une fente de capuchon, sous la direction des piliers de guidage (15), le vérin d'alimentation (16) commande à la plaque de support mobile (14) de se déplacer vers le haut et vers le bas afin de réaliser l'alimentation et la réinitialisation des outil bavure , les deux capteurs de distance (11) mesurent les distances entre les outils et les bavures du élévateur, une valeur moyenne est prise, puis un signal est renvoyé au vérin d'alimentation (16) pour déterminer les distances descendantes exactes des outil bavure , et les bavures sont éliminées avec précision par coopération de la roue en rotation et des outils alimentés linéairement.
